# EUROPEAN PATENT SPECIFICATION

(11) **EP 0 789 291 B1**
(45) Date of publication and mention of the grant of the patent: **02.04.2003**
(21) Application number: 96916178.5
(22) Date of filing: 04.06.1996
(51) Int. Cl.: G05D 11/00, A23K 1/165

(54) **LIQUID ENZYME DOSER**
VORRICHTUNG ZUR DOSIERUNG VON ENZYMEN IN FLÜSSIGER FORM
DOSEUR D'ENZYMES LIQUIDES

(30) Priority: 05.06.1995 ES 9500111
(43) Date of publication of application: 13.08.1997
(73) Proprietor: Mangra S.A., 08560 Manlleu (ES)
(72) Inventor: VEGA PLAZAS, Pablo, E-08551 Tona (ES)
(74) Representative: Mérigeault, Shona
(86) International application number: ES9600127
(87) International publication number: WO96039650

(56) References cited:
- ES-A- 2 003 958
- FR-A- 2 628 340
- GB-A- 1 572 761

## Description

### Field of the invention

The subject of the invention in a monobloc apparatus for dosing enzymes, for the addition, dosing or admixing of enzymes in the liquid state in the process of preparing food, preferably post-pelletized food.

### Prior art

From the biochemical point of view the addition of particular enzymes in the manufacture of compound food could be defined as the admixing of a substance capable of activating or facilitating a chemical reaction which allows the conversion or breakdown of a substance.

Like many other biological functions, animal digestion in the sum of a set of chemical transformations activated by enzymes which act on ingested fonds.

At the present time, new animal nutrition techniques incorporate the use of various types of enzymes, making it possible to increase the nutritional value of feed by improving its digestibility and thereby achieving large yields and high conversion ratios.

It is therefore logical to facilitate the dosing of the laid enzymes in liquid form for the manufacturer of compound feed by furnishing him with an apparatus which allows him to effect the said addition correctly, with the greatest ease of installation, handling, robustness and accuracy.

In order to determine the type of dosing system, we ought to consider two points:
- Any enzymatic product, be it of solid or liquid type, possesses the property of being a heat-sensitive product, that is to say that, when subjected to high temperatures during the various manufacturing processes, they are to a large extent destroyed.
- The present trend of manufacturers of feed for young animals in the mainly pig and poultry sector is to produce extruded, expanded and pelletized feed (at the very least pelletized). It is in this type of feed and for these young animals that the addition of enzymes in the liquid state offers better
- results. Admixing the said liquids into pre-pelletized meal would destroy some of the enzymatic properties on account of the high temperatures to which they would be subjected in this phase of the manufacturing process.

Bearing in mind that the quantities of enzymes in the liquid state to be admixed will be relatively small (of the order of 600 cc per tonne of manufactured feed) and that the entire spectrum of dosing apparatuses of the monobloc type has been devised for small reservoirs of liquid in the form of 50 - 100 l drums, the main characteristics which the said apparatuses should possess could be determined as follows:
- High-precision dosing in 1/minute;
- Ease of installation and handling;
- Robustness of the plant components;
- Almost zero maintenance.

In the patent ES2003958, the proprietor, Mangra S.A., has already protected a continuous-mode system for dosing and admixing fluids in the process for pelletizing compound feeds. This system, however, was designed to work while hot during the pelletization process since the substance to be dosed, molasses, was not heat-sensitive.

GB 1572761 discloses a method of manufacturing animal feedstuff by spraying heat-sensitive enzymes in suspension with a liquid or molten fat, which prevents the enzyme from thermal and moisture inactivation.

Most of the dosing apparatuses currently on the market use pulsed dosing pumps, either of the plunger or membrane type. The said pumps are adjusted via a control located on the actual dosing or body unit. Verification that each pulse is equivalent to a specified rate of atomization has to be carried out via in-situ tests. This system entails the following drawbacks:
- It presupposes that each pulse determines a flow rate without there being a flow rate meter to verify this;
- Regulation is manual, there being no automatic monitoring;
- Regular tests need to be carried out to control dosing quality.

On the European market there are pumps similar to those used in the dosing system which is the subject of the invention, but they are built into dosing devices which lack microregulation and electronic data processing.

Likewise, known injectors have spraying angles which vary solely as a function of the working pressure and do not embrace all the sprinkling possibilities offered by the components of the enzyme-dosing system which is the subject of the invention.

### Summary of the invention

The foregoing considerations lay down the guideline that the dosing system will be a continuous addition of enzymes, to be carried out after the pelletization process, using a product that has already been pelletized and chilled.

Consequently the system will consist of an admixing of enzymes which will be accomplished by utilizing the discharging of the pellet as it exits the chiller, either as it drops or during transportation.

For this purpose a specific product-flow sensor will be fitted which will advise when to begin dosing and also when to terminate it.

The dosing of enzymes will be monitored electronically in an automatic manner by a microprocessor which will combine the following functions:
- Directly reads machine production either on the basis of the density of the product or continuous weighing;
- Adjusts the sprinkling flow rates by actuating a microregulation valve, processing the flow rates obtained from it by means of a flow rate meter;
- Stores and processes incidents (alarms, checks, etc.) and parameters (times, tonnes manufactured, etc.).

### Detailed description of the invention

It will be necessary to determine the tonnes/hour of product transported by the conveyances so as thereby to calculate the l/minute which have to be added. (0.6 l of enzymes per tonne of product, approx.).

Dosing will be accomplished by enzyme being sprayed through an injector or injectors with one or more. specific spraying angles for sprinkling the entire width of the conveyances. The working or atomization pressure will be achieved with a magnetic-drag gear pump. The rate of admixing will be regulated by a microregulation valve. The said rates will be metered with a precision volumetric gauge and displayed using a digital 1/minute indicator so as subsequently to obtain their total in litres using their relevant totalizer gauge.

In particular, the present invention provides an apparatus for dosing a liquid enzyme comprising:
a) at least one thermoregulated vessel for storing the liquid enzyme;
b) spraying means comprising an injector for spraying the liquid enzyme onto a product that is conveyed beneath the injector;
c) a dosing circuit for providing flow communication for the liquid enzyme between the thermoregulated vessel and the spraying means;
d) extracting means for pumping the liquid enzyme from the vessel to the spraying means and for maintaining a constant fluid pressure in the dosing circuit;
e) microregulation valve means, including a microregulation valve in the dosing circuit, for regulating flow of the liquid enzyme to the injector to a rate of between about 100- 300 cc/minute;
f) flow meter means in the dosing circuit for metering a rate flow of the liquid enzyme to the injector with an accuracy of about ± 0.2% by volume of liquid enzyme flowing to the injector without regard to a density or viscosity of the liquid enzyme; and
g) electronic control means for monitoring the flow meter means and for displaying the rate of flow of the liquid enzyme to the injector.

The preferred embodiment of the invention will now be described with the aid of the following figures:
- Figure 1: Detail of the volumetric flow meter
- Figure 2: Detail of the flow valve/injector body assembly
- Figure 3: General operating diagram
- Figure 4: Example of the arrangement of the various components incorporated.

There now follows a detailed description of the invention on the basis of the various elements of the apparatus, taken separately by means of the figures:
Figure 1:
   (1) PINION WITH MAGNETS
   (2) PINION WITH HOLLOW ORIFICES
Figure 2:
   (3) ENZYMATIC LIQUID INLET JONCTION
   (4) ELECTRIC FLOW VALVE
   (5) INJECTOR GUIDE PIPE
   (6) INJECTOR SUPPORT
   (7) INJECTOR
   (8) AIR INLET NOZZLE
Figure 3:
   (9) ENZYME VESSEL: with monitored temperature
   (10) VALVE 1
   (11) FILTER
   (12) PUMP
   (13) MANUAL VALVE
   (14) MANOMETER 1
   (15) NON-RETURN VALVE
   (16) FLOW RATE METER
   (17) MICROREGULATION VALVE
   (18) VALVE 2
   (19) INJECTOR
   (20) VALVE 3
   (21) MANOMETER 2
   (22) VALVE REGULATING CIRCUIT PRESSURE
   (23) MICROPROCESSOR: Monitors dosing automatically

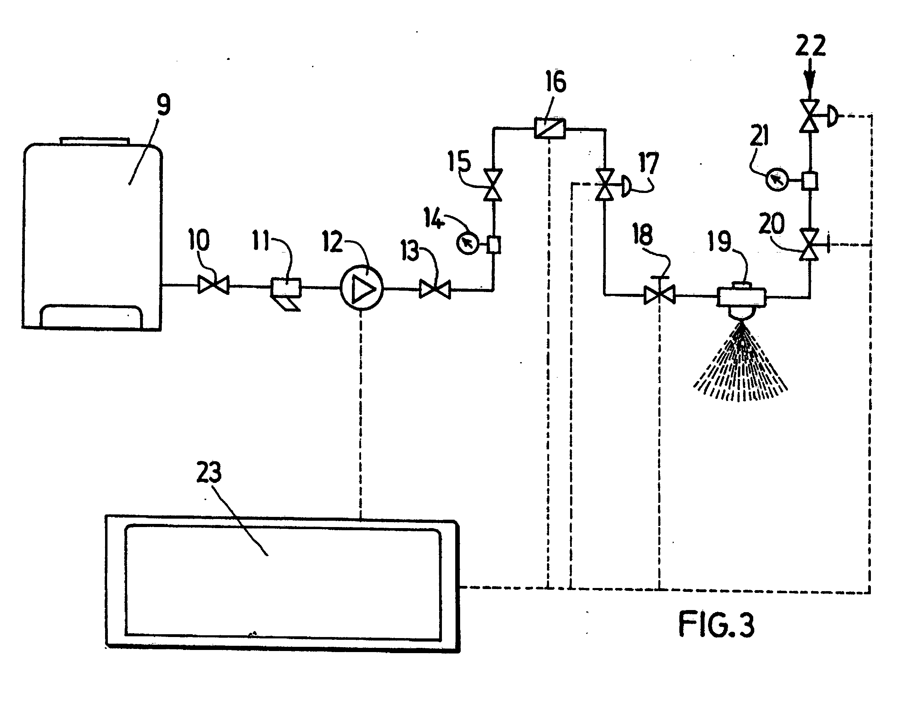

### General operating diagram (Fig. 3)

Via an in-line continuous weighing system it is possible to determine the production in MT/h of feed pellets. This data item in entered into the microprocessor (23). Starting from the tank (9) for storing the enzymatic liquid, the dose of enzyme to be admixed with the pellet is extracted as the pellets are produced. Extraction of the enzyme liquid is accomplished by means of the gear pump (12), the function of which is to maintain a constant pressure of previously filtered fluid, and suction, at the inlet of the microregulation valve (17). The said valve will be operated so as to monitor the appropriate injection rates which are constantly measured by a high-resolution flow rate meter (16) which is extremely accurate. The microprocessor (23) will be responsible for integrating these three functions. It will read the production of feed and will dose the enzymes, monitoring the microregulation valve so as to obtain an instantaneous fluid flow rate read by the high-resolution flow rate meter (16). The admixing of the enzymatic liquid will be carried out by pressure atomization, with or without the aid of compressed air, through one or more injectors (19). The planar spraying angles will be variable, with the objective of sprinkling the product homogeneously.

### Non-limiting example of a preferred embodiment of the invention

### Figure 4:

This figure describes a set-up and arrangement of the component elements of the apparatus by way of a non-limiting example of an embodiment of the invention.
(24) APPARATUS SUPPORT BASE PLATFORM
(25) ELECTRICALLY-OPERATED VALVE/ATOMIZATION INJECTOR ASSEMBLY

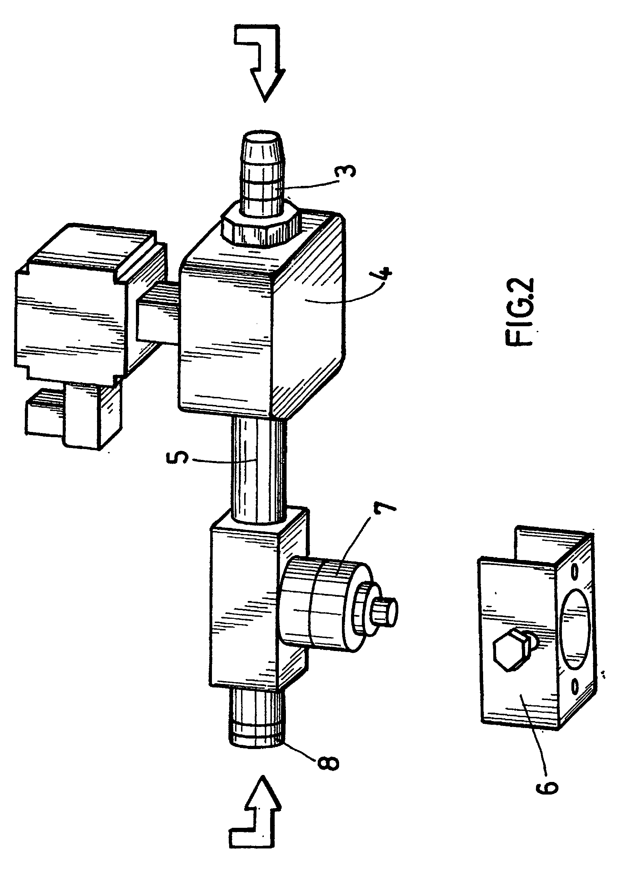

This assembly is detailed in Figure 2. The on or off electrically-operated valve for injecting the fluid is a two-way valve which is normally closed and of sufficient bore to prevent possible throttling of the flow.

The injection body is formed by a flat spraying nozzle with tapered edges for obtaining high uniformity of distribution (spraying angles of between 25 and 110°). The spraying tips are of the interchangeable type. The spraying rates, evaluated with H₂O, are shown in the table below:

| PRESSURE | 1 bar | 2 bar | 3 bar | 4 bar | 5 bar |
|---|---|---|---|---|---|
| C1 0050 | 0.11 | 0.16 | 0.20 | 0.22 | 0.251/min |
| C1 01 | 0.23 | 0.32 | 0.39 | 0.45 | 0.501/min |

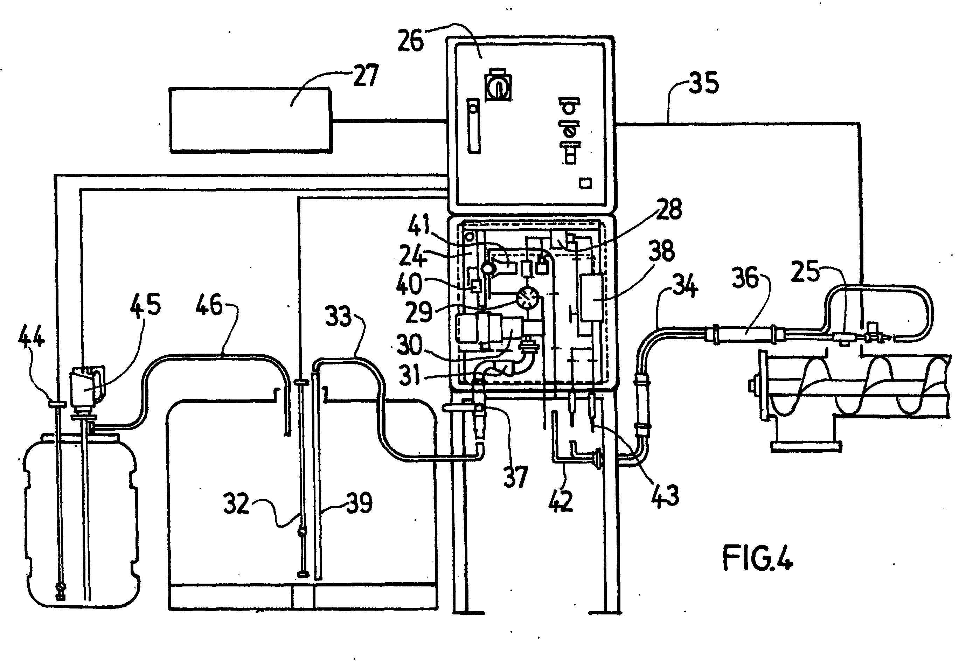

The electrically-operated valve/injector assembly has a stainless-steel pipe-like extension with fastening facility (Figs 2, 4) so that the various sprinkling sections can be displaced and adjusted in each particular case.

The selection of dosing injectors will be based on two types, one for dosings of the order of from 100 to 250 cc/minute (C1 0050) and the other for dosings of from 250 to 500 cc/minute (C1 O1).

The fitting of one or the other will logically depend on the quantity, in tonnes per hour, of finished product taken away by the conveyance and to which injection will be applied.

The selection of one or the other will thus depend on the quantities or margins thereof which it is desired to dose.

For example, assume a conveyance of finished product produced at a rate of 15MF/h and that the quantity of enzyme liquid is to be 0.6 l per tonne.
- 0.6 x 15 = 9 l/h = 150 cc/minute. In this case, Cl 0050 will be used. Assume instead a conveyance of finished product produced at a rate of 30 MT/h, and that the quantity of enzyme liquid in to be 0.69 l per tonne.
- 0.69 x 30 = 20,700 l/h = 345 cc/minute. In this case, C1 01 will be used.

In either case, having determined the rating of the injector, dosing will be carried out by increasing or decreasing the flow rate using the microregulation valve.
(26) ELECTRICAL POWER BOARD

The said board is located in the same base platform of the apparatus. It will contain all the possible connections of the elements to be monitored, including the monitoring link with the front panel, or the link to a hypothetical panel or remote control board, as the case may be. The said board will contain:
- Terminals for the mains inlet connection;
- Magnetothermal protection and contactor for the admixing pump;
- Control relays and isolating transformer;
- Connection terminals for: minimum drum level, volumetric flow rate meter, injection electrically-operated valve and automatic dosing convection;
- All of the above electrical equipment will be mounted in a self-extinguishing, double-insulation modular casing with high resistance to chemical agents and high temperatures (150°C) and manufactured in reinforced polyester.
(27) DOSING CONTROL MICROPROCESSOR

This is the monitoring part of the dosing apparatus. Just like the entire assembly, this will be situated as closely as possible to the points of injection. If by chance there in a remote control board, it would be located according to the choice of the operator responsible for monitoring dosing. The contents of the control. board correspond with the functions to be undertaken by the microprocessor and which are as follows:
- Emergency breaker switch and apparatus-on switch;
- Illuminated on and off buttons for the admixing pump;
- Buttons for relieving/throttling the microregulation valve. Illuminated indicator buttons for dosing alarms;
- Illuminated indicator warning of minimum level in the fluid container;
- Litre totalizer gauge;
- Indicator/monitor of l/min with monitoring of maximum and minimum dosing alarms;
- If there is remote control, all of the control elements will be placed in a monobloc metal cabinet, its sides being constructed from a single piece and bent double. Painted outside and inside with textured polyester-epoxy resin.

### COUNTING AND TOTALIZING OF DOSING

Any HIGH-PRECISION flow rate gauge or meter (FLOW RATE METER) of the OVAL GEAR or COG type requires high resolution since, when metering the fluid flowing through, a PULSE STRING of the order of 2000 to 2300 PULSES is obtained for each litre of product.

All of this flow rate metered in the form of PULSES will have to be translated and reflected in an analytical form as instantaneous quantities of cc per minute, as will its total in litres.
• Flow rate meter pulse converter with instantaneous indication of flow rate. The pulses emitted by the flow rate meter will have to be forwarded to a frequency/current (mA) converter, monitored by the microprocessor which will fulfil a dual function:
   - FONCTION A:: Converting the pulse frequency into a variable current of from 0 to 20 mA which correctly processed we shall obtain a reading of INSTANTANEOUS FLOW RATE IN CC/MINUTE.
   - FUNCTION B:: In parallel with the above function there is an optocoupled output signal of identical frequency to the frequency of the input. It is then possible with these pulses to count them later in conjunction with the density correction factor and TO TOTAL THEM IN LITRES of dosing.
• Dosing totalizer and its programming.

After processing by the (optocoupled) CONVERTER, the frequency of the pulses generated by the flow rate meter when the fluid passes through it needs to be received by the totalizer.

Any precision meter, such as the one under discussion, generates a large quantity of PULSES/LITRE. If we were interested in monitoring a dosing in KILOGRAMS, it would be necessary to multiply the said pulse frequency by a correction factor directly related to the density of the fluid so as thereby to translate litres into kilograms.

This is the chief function of the DOSING TOTALIZER It consists of a programmable gauge/totalizer with a correction scale or factor (pulse divider) which makes it possible to convert PULSES/LITRE into PULSES/KILOGRAMS.

The said gauge possesses a wide spectrum of processes and can be programmed for various actuation areas.
• Indication of instantaneous flow rates.

Use will be made of a digital indicator with two alarm preselects or levels to display the flow rates, in CC/MINUTE, which will be dosed at any time in the enzyme-addition process.

The signal input will be from 4 to 20 mA with a digital read out of between 0 and 1000 CC/MINUTE. Its two alarm outputs, correctly preselected, will give two alarm levels.

Assume that it is desired to dose 630 cc/minute and establish dosing error margins of 20 cc/minute and therefore set the minimum permitted dosing alarm pre-selector at +610 and that for the maximum dosing alarm at +650. The permitted error will be with these +/-20 cc dosing levels.
(28) FLOW RATE METER

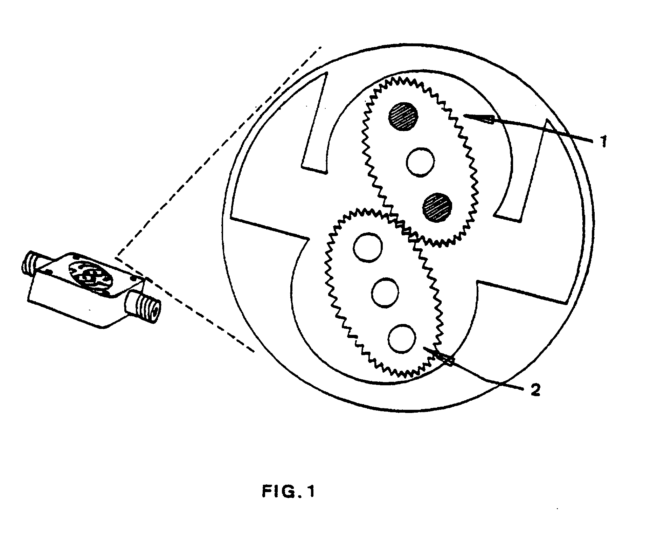

The said meter operates on the principle of positive-displacement volumetric metering in piping. It consists of two oval wheels housed in a chamber through which the liquid flows. These oval wheels are gears of oval outline which are forced to rotate continuously through the thrust of the liquid flowing through, allowing the passage of cyclic volumes for each revolution of the said wheels (Figure 1).

The accuracy of metering, using this system, is one of the highest which is presently available in the market given, additionally, that it is virtually unaffected by the variation in the. density or in the viscosity of the fluid. With the subject of the invention an accuracy of ± 0.2% of the actual volume is obtained for any condition of the fluid and any metering rating.

The sensor element (meter) will be placed in the piping and, by means of a static pulse generator placed against the body, it will deliver signals of variable frequency, depending on the flow rates, to an electronic receiver placed remotely which, in actual fact, is the element for reading the volume which has flowed through. The magnetically generated pulses (IMP/L) are received, processed and converted into a user-friendly read-out via gauges providing a direct indication of flow rate in real time.

To summarize, it could be said that the said meter possesses the following general technical characteristics:
- HIGH ACCURACY;
- MINIMUM LOSS OF HEAD ON ACCOUNT OF THE ACTUAL CONSTRUCTION;
- VERSATILE/ COMPATIBLE, being unaffected by vortices or turbulence in the piping and therefore requiring no straight sections and capable of being placed immediately at the outlet of a pump.

It has a 0.5-50 litres/hour metering rating, with maximum working temperatures of -10°C to +70°C, a working pressure of 5 kg/cm2 and an accuracy of ± 0.5% of actual volume.
(29) PRESSURE INDICATING MANOMETER

This will be located on the front panel of the dosing cabinet and joined to the admixing piping with a flexible joint. It in a manometer with glycerine bath, the best choice in pressure metering applications with rapid and large changes of head, and pump vibrations and pulsations. It has a metering rating of 0-10 bar.
(30) ADMIXING ELECTROPUMP

Magnetic-drag rotary gear pump devised uniquely and exclusively for viscous and chemically abrasive liquids, linear dosings; low noise level and highly robust. It has a maximum working pressure of 7-12 bar.
(31) SPRAYING FILTER

This is an impurities filter, for fluid dosing, giving high performance in terms of reliability and accuracy. It in essential in this type of dosing to filter out the impurities which could to a large extent impair the FLOW RATE METER and also the ATOMIZATION INJECTORS. It offers the option of easy and rapid exchange of the filtering MESH with four types of pitch. It also possesses high strength at the 16-20-bar working pressure.
(32) MINIMUM LEVEL and MACHINE TRANSFER

Level detector with magnetic float This in constructed from two thin leaves of ferromagnetic material separated by a narrow gap and hermetically enclosed in a glass ampoule filled with inert gas so as to avoid contaminants and oxidation of the contacts. Maximum pressure 50 bar.
(33) FLEXIBLE SPR.AYING ROSE

The flexible spraying hose will be joined to a rigid PVC straight which must have a non-return valve at its extreme end. The hose is reinforced with polyester mesh. Maximum nominal pressure 10 bar; maximum_temperature + 70°C.
(34) FLEXIBLE ADMIXING HOSE
(35) ELECTRICAL CONNECTION CABLES

The VVFV/RVFV-type hoop-iron armoured cable is the appropriate cable when flexibility criteria are not of maximum importance but where the level of mechanical protection of the cable against knocks, squashing, rodents, etc., in fundamental. This cable has crosslinked polyethylene insulation thereby permitting greater power transmission for equal cross section. The electronic signal leads are made from screened, flexible cable with characteristics similar to the previous type.
(36) GALVANIZED-STEEL PIPING/CLAMPS

Galvanized-steel lengths of straight pipe of greater diameter than that of the injection hose will be supplied for the installation of the admixing piping on the atomization body so as to produce a two-pipe gauged system, the said lengths being fastened, until they reach the atomizing element, with their relevant clamps, either welded to metal supports or fastened to structural walls using nails.
(37) MANUAL FLOW VALVE

The purpose of this is to create a bypass to provide the option for quality control of dosing using the sampling taps.
(38) MICROREGULATION VALVE

The purpose of the apparatus is mainly concerned with the addition of a specific quantity of ENZYMATIC LIQUID in cc per minute. The said quantities will vary between 100 and 300 cc/minute. To achieve this requires an injection pump which gives a constant working pressure, accurate volume metering with which the said quantities can be measured and, of course, a MICROREGULATION valve capable of setting the appropriate amount, expressed as grammes, of injection for each application.

Control of the said valve may be motorized so that it can be driven remotely.

Regulation by rotary control of up to 20 actuator turns, controlled by a motorized positioning actuator.

Maximum working pressure 5000 psi. Temperature range -29°C - +121°C.
(39) SPRAYING PIPE/NON-RETURN VALVE ASSEMBLY

In order to facilitate the process of discharging the containers or drums and to prevent possible problems which might arise through twisting or excessive mobility of the spraying tip, a straight and rigid length of PVC spraying piping has been constructed, the relevant non-return valve being screwed onto its end. This valve in of the foot type in order to keep the piping full for correct dosing. Essential for the type of flow rate mater employed in the said plant. Maximum temperature 240°C.
(40) AIR FLOW ELECTRICALLY-OPERATED VALVE

This in three-way, normally closed, with a working temperature of -10 - +140°C.
(41) AIR PRESSURE REGULATOR

Membrane which stabilizes the regulated pressure (0-4 bar) when the lime pressure varies. High flow rate with restricted pressure drop. Rapid release of excess pressure. Maximum inlet pressure 13 bar. Maximum service temperature 50°C.
(42) AIR PIPING
Nylon pipe which withstands high air pressures.
(43) SAMPLING TAP

The fitting of sampling taps in essential for any type of dosing in order to carry out the relevant quality controls on the quantities added as well as on the extraction of product specimens. BALL VALVES are fitted for the said function These will be actuated manually so as to facilitate processes for taking specimens, calibrations and replacement of any elements in the piping. Maximum pressure 1000 psi, maximum temperatures -25°C - +232°C.
(44) MINIMUM VESSEL LEVEL

This in an indicator of the minimum level of pure liquid undiluted, enzymes in the vessel.
(45) CHARGING PUMP

The function of this in to permit the transfer of pure enzyme from the initial vessel into the dilution tank.
(46) FLEXIBLE CHARGING HOSE

The enzyme may obviously be dosed directly in the desired concentration, so the intermediate dilution tank and the attendant charging and level control systems must therefore be interpreted as an optional addition to the apparatus. In general, Figure 4 shows an embodiment of the invention which must be taken in its widest context, without the said example serving as a restrictive interpretation of the underlying inventive principle.

## Claims

1. An apparatus for dosing a liquid enzyme comprising:
a) at least one thermoregulated vessel (9) for storing the liquid enzyme;
b) spraying means comprising an injector (7) for spraying the liquid enzyme onto a product that is conveyed beneath the injector;
c) a dosing circuit for providing flow communication for the liquid enzyme between the thermoregulated vessel and the spraying means;
d) extracting means for pumping the liquid enzyme from the vessel to the spraying means and for maintaining a constant fluid pressure in the dosing circuit;
e) microregulation valve means, including a microregulation valve (17) in the dosing circuit, for regulating flow of the liquid enzyme to the injector to a rate of between about 100- 300 cc/minute;
f) flow meter means (16) in the dosing circuit for metering a rate flow of the liquid enzyme to the injector (7) with an accuracy of about ± 0.2% by volume of liquid enzyme flowing to the injector (7) without regard to a density or viscosity of the liquid enzyme; and
g) electronic control means (23) for monitoring the flow meter means (16) and for displaying the rate of flow of the liquid enzyme to the injector (7).

2. An apparatus as claimed in claim 1, wherein the extracting means comprises a magnetic-drag electropump (12) for viscous and chemically abrasive liquids which has a maximum working pressure of 12 bar.

3. An apparatus as claimed in claim 1, wherein the extracting means comprise a filtration system (11).

4. An apparatus as claimed in claim 3, wherein the filtration system comprises a mesh with a high strength at a working pressure of 16 bar and at 20°C.

5. An apparatus as claimed in claim 1, wherein the microregulation valve means (17) comprises a motorized valve (18) which can be adjusted through rotary control of up to 20 turns of an actuator, and has a maximum working pressure of 5000 psi and a working temperature range from - 29°C to + 121°C.

6. An apparatus as claimed in claim 5, wherein the microregulation valve is adjustable by remote control.

7. An apparatus as claimed in claim 1, wherein the flow meter means (16) comprise a flow rate meter (16) that is a positive displacement flow rate meter/gauge with a metering rating of 0.5 - 50 l/h, which operates at a maximum working pressure of 5 kg/ cm² and a temperature of -10°C to +70°C.

8. An apparatus as claimed in claim 5, wherein the flow rate meter (16) comprises a series of pairs of oval cog wheels arranged (1, 2) in piping traversed by the liquid enzyme to be metered, which move in a rotary and continuous manner through the thrust of fluid flowing through, generating a series of electrical signals which are sent to a frequency/current converter.

9. An apparatus as claimed in claim 1, wherein the spraying means comprises an electrically-operated valve (4) with a working temperature rating which varies between -10°C and +140°C; an air-pressure regulator with a rating of 0-4 bar; a two-way enzymatic liquid injection on and of electrically-operated valve (c) with a temperature rating and a working pressure of -30°C to +140°C and 0.3 to 20 atmospheres respectively; and a gaseous-fluid pneumatic-atomizing injector (7) having a nozzle (8) with tapered edges which produces a planar spray with a flow rate of between 0.1-0.5 l/min and spraying angles of between 25° and 110°.

10. An apparatus as claimed in claim 1, wherein the electronic control means (23) comprise a flow indicator for receiving signals from the flow rate meter means (16) and relays for opening and closing the microregulation valve (17).

11. An apparatus as claimed in claim 1 further comprising means for measuring a weight of the product that is conveyed beneath the injector, wherein the electronic control means (23) actuates the microregulation valve (17) to adjust the rate of flow of the liquid enzyme to the injector.

12. An apparatus as claimed in claim 1, wherein the spraying means comprises (a) a gaseous-fluid atomizing injector (7) having nozzle means (8) for producing a planar spray with a flow rate of between 0.1 - 0.5 l/min and spraying angles of between 25° and 110° and (b) an on and off electrically-operated valve (4),

13. An apparatus as claimed in claim 12, wherein the nozzle means (8) comprises a first and second nozzle, said second nozzle being mountable in the injector when the first nozzle is detached from the injector, said second nozzle providing the injector with a different spraying rate than said first nozzle.

14. Use of the apparatus of as claimed in any one of claims 1 to 11 for applying a liquid enzyme to a product, said product being conveyed to said apparatus so that it passes beneath the injector of the apparatus, and said liquid enzyme being sprayed onto the product in a desired dose.

15. Use of the apparatus as in claim 14, wherein the product comprises food pellets.

16. Use of the apparatus as in claim 15, wherein the liquid enzyme is sprayed by the apparatus onto the food pellets in an amount in the order of about 600 cc per ton of food pellets.

## Patentansprüche

1. Vorrichtung zur Dosierung eines flüssigen Enzyms umfassend:
a) wenigstens ein temperaturgeregeltes Gefäß (9) zur Speicherung des flüssigen Enzyms;
b) Sprühmittel umfassend eine Spritzdüse (7), um das flüssige Enzym auf ein Produkt zu sprühen, das unterhalb der Spritzdüse vorbei transportiert wird;
c) einen Dosierkreistauf, um für das flüssige Enzym eine Kommunikation in Strömungsform zwischen dem temperaturgeregelten Gefäß und dem Sprühmittel bereitzustellen;
d) Extraktionsmittel, um das flüssige Enzym von dem Gefäß zu dem Sprühmittel zu pumpen und um einen konstanten Fluiddruck in dem Dosierkreislauf aufrechtzuerhalten;
e) Ventilmittel zur Mikroregulierung einschließlich eines Mikroregulierungsventils (17) in dem Dosierkreislauf zur Einstellung der Durchflussmenge des flüssigen Enzyms zu der Spritzdüse auf einen Mengenstrom von ungefähr 100- 300 Kubikzentimeter pro Minute;
f) Mittel zur Messung der Durchflussmenge (16) in dem Dosierkreislauf, um eine Strömungsgeschwindigkeit des flüssigen Enzyms zu der Spritzdüse (7) mit einer Genauigkeit von ungefähr ±0,2 Volumenprozent des flüssigen Enzyms, das zu der Spritzdüse (7) fließt, zu messen, und zwar unabhängig von einer Dichte oder Viskosität des flüssigen Enzyms; und
g) elektronisches Steuermittel (23) zur Überwachung des Mittels zur Messung der Durchflussmenge (16) und zur Anzeige der Strömungsgeschwindigkeit des flüssigen Enzyms zu der Spritzdüse (7).

2. Vorrichtung nach Anspruch 1, worin das Extraktionsmittel eine Elektropumpe mit magnetischer Schleppe (12) für viskose und chemisch schmirgelnde Flüssigkeiten umfasst, welche einen maximalen Betriebsdruck von 12 bar aufweist.

3. Vorrichtung nach Anspruch 1, worin das Extraktionsmittel ein Filtrationssystem (11) umfasst.

4. Vorrichtung nach Anspruch 3, worin das Filtrationssystem ein Sieb mit einer hohen Festigkeitbei einem Betriebsdruck von 16 bar und bei einer Temperatur von 20 °C umfasst.

5. Vorrichtung nach Anspruch 1, worin das Ventilmittel für die Mikroregulierung (17) ein motorisch angetriebenes Ventil (18) umfasst, das durch die Drehbewegung von bis zu 20 Umdrehungen eines Stellglieds eingestellt werden kann, und einen maximalen Betriebsdruck von 5.000 PSI sowie einen Betriebstemperaturbereich von -29 °C bis +121 °C hat.

6. Vorrichtung nach Anspruch 5, worin das Mikroregulierungsventil durch Fernsteuerung einstellbar ist.

7. Vorrichtung nach Anspruch 1, worin das Mittel zur Messung der Durchflussmenge (16) einen Durchflussmengenmesser (16) umfasst, der ein Verdrängungszähler / -messinstrument ist, welcher einem Messbereich von 0,5 bis 50 l/h hat und bei einem maximalen Betriebsdruck von 5 kg/cm² und einer Temperatur von -10 °C bis 70 °C arbeitet.

8. Vorrichtung nach Anspruch 5, worin der Durchflussmengenmesser (16) eine Reihe von Paaren von ovalen Zahnrädern (1, 2) umfasst, die in einer Rohrleitung angeordnet sind, durch die das zu messende, flüssige Enzym strömt, die sich in einer rotierenden und kontinuierlichen Weise aufgrund des Schubs des durchströmenden Fluids bewegen und eine Reihe von elektrischen Signalen erzeugen, die an einen Frequenz-Strom-Wandler übermittelt werden.

9. Vorrichtung nach Anspruch 1, worin das Sprühmittel ein elektrisch angetriebenes Ventil (4) umfasst, dessen Betriebstemperaturbereich zwischen -10 °C und +140 °C variiert; weiterhin einen Luftdruckregler mit einem Betriebsbereich von 0 - 4 bar; ein elektrisch angetriebenes Ventil mit Ein-Aus-Regelung für eine Zweiwegeeinspritzung der enzymatischen Flüssigkeit (c) mit einem Temperaturbereich und einem Betriebsdruck von -30 °C bis +140 °C beziehungsweise 0,3 bis 20 Atmosphären; und eine Spritzdüse zur pneumatischen Zerstäubung des gasförmigen Fluids (7), welche eine Düse (8) mit konisch zulaufenden Kanten aufweist, die einen ebenen Sprühstrahl mit einer Durchflussmenge zwischen 0,1 - 0,5 l/min erzeugt und Sprühwinkel zwischen 25° und 110° hat.

10. Vorrichtung nach Anspruch 1, worin das elektronische Steuermittel (23) eine Durchflussmengenanzeige zum Empfang der Signale von dem Mittel zur Messung der Durchflussmenge (16) und Relais zum Öffnen und Schließen des Mikroregulierungsventils (17) umfasst.

11. Vorrichtung nach Anspruch 1, die weiterhin ein Mittel zur Messung eines Gewichts des Produkts, das unterhalb der Spritzdüse vorbei transportiert wird, umfasst, worin das elektronische Steuermittel (23) das Mikroregulierungsventil (17) betätigt, um die Strömungsgeschwindigkeit des flüssigen Enzyms zu der Spritzdüse einzustellen.

12. Vorrichtung nach Anspruch 1, worin das Sprühmittel (a) eine Spritzdüse zur Zerstäubung des gasförmigen Fluids (7), wobei diese ein Düsenmittel (8) zur Erzeugung eines ebenen Sprühstrahls mit einer Durchflussmenge von 0,1 - 0,5 l/min und Sprühwinkeln zwischen 25° und 110° aufweist, und (b) ein elektrisch angetriebenes Ventil mit Ein-Aus-Regelung (4) umfasst.

13. Vorrichtung nach Anspruch 12, worin das Düsenmittel (8) eine erste und eine zweite Düse umfasst und diese zweite Düse in der Spritzdüse installiert werden kann, wenn die erste Düse von der Spritzdüse abgenommen ist, und diese zweite Düse der Spritzdüse eine unterschiedliche Sprührate als diese erste Sprühdüse verleiht.

14. Verwendung der Vorrichtung nach einem der Ansprüche 1 bis 11 zum Aufbringen eines flüssigen Enzyms auf ein Produkt, wobei dieses Produkt so zu dieser Vorrichtung transportiert wird, dass es unterhalb der Spritzdüse der Vorrichtung vorbeiläuft und dieses flüssige Enzym auf das Produkt in einer gewünschten Dosis gesprüht wird.

15. Verwendung der Vorrichtung nach Anspruch 14, worin das Produkt aus einem Nahrungsmittel in Granulatform besteht.

16. Verwendung der Vorrichtung nach Anspruch 15, worin das flüssige Enzym durch die Vorrichtung auf das granulatförmige Nahrungsmittel in einer Größenordnung von ungefähr 600 Kubikzentimeter pro Tonne an granulatförmigem Nahrungsmittel gesprüht wird.

## Revendications

1. Appareil pour doser une enzyme liquide, comprenant :
a) au moins un récipient (9) à température régulée pour stocker l'enzyme liquide ;
b) des moyens de pulvérisation qui comprennent un injecteur (7) pour pulvériser l'enzyme liquide sur un produit qui est transporté en dessous de l'injecteur ;
c) un circuit de dosage pour donner à l'enzyme liquide une communication d'écoulement entre le récipient à température régulée et les moyens de pulvérisation ;
d) des moyens d'extraction pour pomper l'enzyme liquide du récipient vers le moyen de pulvérisation et pour maintenir une pression de fluide constante dans le circuit de dosage ;
e) des moyens de micro-régulation à vanne, comprenant une vanne (17) de micro-régulation dans le circuit de dosage, pour réguler l'écoulement de l'enzyme liquide vers l'injecteur à un débit compris entre 100 et 300 cc/minute ;
f) un moyen à débitmètre (16) dans le circuit de dosage, pour mesurer un débit d'écoulement de l'enzyme liquide vers l'injecteur (7) avec une précision d'environ +/- 0,2% en volume d'enzyme liquide s'écoulant vers l'injecteur (7), sans tenir compte d'une densité ou d'une viscosité de l'enzyme liquide ; et
g) un moyen de commande électronique (23) pour surveiller le moyen à débitmètre (16) et pour afficher le débit d'écoulement de l'enzyme liquide vers l'injecteur (7).

2. Appareil selon la revendication 1, dans lequel le moyen d'extraction comprend une électropompe (12) à entraînement magnétique pour des liquides visqueux et chimiquement abrasifs, dont la pression maximale de travail est de 12 bars.

3. Appareil selon la revendication 1, dans lequel le moyen d'extraction comprend un système de filtration (11).

4. Appareil selon la revendication 3, dans lequel le système de filtration comprend un tamis à haute résistance, à une pression de travail de 16 bars et à 20°C.

5. Appareil selon la revendication 1, dans lequel le moyen de micro-régulation à vanne (17) comprend une vanne motorisée (18) qui peut être ajustée par commande de rotation jusqu'à 20 tours d'un dispositif d'actionnement, qui présente une pression maximum de travail de 5 000 psi et une plage de température de travail de - 29°C à + 121°C.

6. Appareil selon la revendication 5, dans lequel la vanne de micro-régulation peut être ajustée par une commande à distance.

7. Appareil selon la revendication 1, dans lequel le moyen à débitmètre (16) comprend un dispositif (16) de mesure du débit d'écoulement qui est une jauge ou un dispositif de mesure du débit d'écoulement à déplacement positif présentant une plage de mesure de 0,5 à 50 l/h et qui travaille à une pression maximale de travail de 5 kg/cm² et à une température de - 10°C à + 70°C.

8. Appareil selon la revendication 5, dans lequel le dispositif (16) de mesure du débit d'écoulement comprend une série de paires de roues dentées ovales (1, 2) agencées dans un conduit traversé par l'enzyme liquide à mesurer et se déplaçant de manière rotative et continue suite à la poussée du fluide qui les traverse en créant une série de signaux électriques qui sont envoyés à un convertisseur de fréquence en courant.

9. Appareil selon la revendication 1, dans lequel le moyen de pulvérisation comprend une vanne (4) actionnée électriquement présentant une plage nominale de température de travail qui s'étend entre - 10°C et + 140°C ; un régulateur de pression d'air d'une pression nominale de 0 à 4 bars ; une injection à deux voies d'enzyme liquide sur une vanne tout ou rien (c) actionnée électriquement qui présente une plage de température de - 30°C à + 140°C et une pression de travail de 0,3 à 20 atmosphères ; et un injecteur pneumatique de pulvérisation (7) à gaz/fluide présentant un ajutage (8) dont les bords sont évasés, qui délivre une pulvérisation plane à un débit d'écoulement compris entre 0,1 et 0,5 l/min et sous des angles de pulvérisation compris entre 25° et 110°.

10. Appareil selon la revendication 1, dans lequel le moyen (23) de commande électronique comprend un indicateur d'écoulement pour recevoir des signaux du moyen (16) de mesure de débit d'écoulement et des relais pour l'ouverture et la fermeture de la vanne de micro-régulation (17).

11. Appareil selon la revendication 1, comprenant en outre un moyen pour mesurer un poids du produit qui est transporté en dessous de l'injecteur, le moyen (23) de commande électronique actionnant la vanne de micro-régulation (17) pour ajuster le débit d'écoulement de l'enzyme liquide vers l'injecteur.

12. Appareil selon la revendication 1, Bans lequel le moyen de pulvérisation comprend (a) un injecteur de pulvérisation (7) à gaz/fluide présentant un moyen à ajutage (8) pour délivrer une pulvérisation plane à un débit compris entre 0,1 et 0,5 l/min et sous des angles de pulvérisation compris entre 25° et 110° et (b) une vanne (4) tout ou rien actionnée électriquement.

13. Appareil selon la revendication 12, dans lequel le moyen à ajutage (8) comprend un premier et un deuxième ajutage ; ledit deuxième ajutage pouvant être monté dans l'injecteur lorsque le premier ajutage est détaché de l'injecteur, ledit deuxième ajutage donnant à l'injecteur un débit de pulvérisation différent de celui dudit premier ajutage.

14. Utilisation de l'appareil selon l'une quelconque des revendications 1 à 11 pour appliquer une enzyme liquide sur un produit, ledit produit étant transporté vers ledit appareil de telle sorte qu'il passe en dessous de l'injecteur de l'appareil et ladite enzyme liquide étant pulvérisée sur le produit à une dose souhaitée.

15. Utilisation de l'appareil selon la revendication 14, dans lequel le produit comprend des pastilles d'aliments.

16. Utilisation de l'appareil selon la revendication 15, dans lequel l'enzyme liquide est pulvérisée par l'appareil sur les pastilles d'aliments en quantité de l'ordre d'environ 600 cc par tonne de pastilles d'aliments.
